# EUROPÄISCHE PATENTSCHRIFT

(11) **EP 3 140 072 B1**
(45) Veröffentlichungstag und Bekanntmachung des Hinweises auf die Patenterteilung: **20.06.2018**
(21) Anmeldenummer: 15717453.3
(22) Anmeldetag: 13.04.2015
(51) Int. Cl.: B23K 26/00, B23K 26/36, G02B 26/10, B23K 26/082

(54) **VERFAHREN ZUR LASERBEARBEITUNG EINER OBERFLÄCHE**
METHOD OF LASER-PROCESSING A SURFACE
PROCÉDÉ D'USINAGE AU LASER D'UNE SURFACE

(30) Priorität: 05.05.2014 DE 102014208371
(43) Veröffentlichungstag der Anmeldung: 15.03.2017
(73) Patentinhaber: Fraunhofer-Gesellschaft zur Förderung der angewandten Forschung e.V., 80686 München (DE)
(72) Erfinder: FLEMMER, John, 52064 Aachen (DE); WILLENBORG, Edgar, 52146 Würselen (DE)
(74) Vertreter: Pfenning, Meinig & Partner mbB
(86) Internationale Anmeldenummer: PCT/EP2015/057955
(87) Internationale Veröffentlichungsnummer: WO 2015/169544

(56) Entgegenhaltungen:
- JP-A- 2011 240 383
- US-A1- 2008 192 250
- US-A1- 2013 073 071

## Beschreibung

Die Erfindung betrifft ein Verfahren zur Laserbearbeitung einer Oberfläche gemäß dem Oberbegriff des Anspruchs 1 (siehe z.B. US2008/192250 A1). Beim Laserpolieren von Metallen wie auch bei vielen anderen Laserverfahren (z.B. Laserbeschriften/Lasermarkieren, Laserstrukturieren, Laserreinigen) wird zur Bearbeitung eine Kombination aus mechanischen Achsen und Laserscanner verwendet. Während der Laserscanner den Laserstrahl sehr schnell über die Werkstückoberfläche führen kann, ist sein Scanfeld von der Größe stark limitiert. Durch die Kombination mit einer oder mehreren mechanischen Linearachsen können deutlich größere Flächen bearbeitet werden.

Werden mechanische Achsen und Laserscanner nicht simultan verwendet, wird also das Werkstück zuerst mittels mechanischer Achsen positioniert und anschließend mittels Laserscanner bearbeitet, nachdem die Achsen das Werkstück positioniert haben - müssen für die Bearbeitung von Flächen, die über das Bearbeitungsfeld des Laserscanner hinaus gehen, diese in mehrere Teilflächen aufgeteilt werden. In diesem Fall wird das Werkstück für jede Teilfläche neu positioniert.

Auch die Bearbeitung von Freiformflächen erfordert oftmals eine Aufteilung der Gesamtfläche in mehrere Teilflächen, da der Einstrahlwinkel des Laserstrahls im Bezug zur Oberflächennormalen möglichst klein gehalten werden sollte. Hierzu ist eine Neupositionierung/Neuorientierung des Werkstücks für jede Teilfläche notwendig, wozu zusätzliche Freiheitsgrade erforderlich sind.

Die Aufteilung in Teilflächen führt im Allgemeinen zu visuellen oder funktionalen Störungen im Überlappungsbereich. Beim Laserpolieren kommt es in diesen Bereichen zu Ansatzkanten in Form eines Materialaufwurfs. Beim Lasermarkieren entsteht durch die Kachelung kein geschlossenes Gesamtbild. Insbesondere wenn mechanische Rotationsachsen zur Positionierung des Werkstücks verwendet werden, ist eine sehr hohe Genauigkeit des mechanischen Systems erforderlich, um zwei Teilflächen exakt aneinander zu legen.

Eine Lösung, um große oder/und gekrümmte Flächen durchgängig zu bearbeiten, ist die simultane Bewegung von Laserscanner und mechanischen Achsen. Um die simultane Bearbeitung dieser beiden zunächst unabhängigen Systeme zu realisieren, muss eine Synchronisierung untereinander realisiert werden, damit eine fehlerfreie Bearbeitung gewährleistet ist.

Der Einsatz einer Steuerung für alle Freiheitsgrade ist nicht möglich, da der Interpolationstakt des Laserscanners aufgrund der hohen Dynamik deutlich kleiner ist als der der Steuerung für die mechanischen Achsen.

Aufgabe der vorliegenden Erfindung ist es, eine gleichmäßigere Laserbearbeitung großer und/oder gekrümmter Flächen zu ermöglichen.

Die Aufgabe wird gelöst durch das Verfahren zur Laserbearbeitung einer Oberfläche nach Anspruch 1. Diese Erfindung definiert auch ein Verfahren zur Laserbearbeitung einer Oberfläche eines Werkstücks gemäß Anspruch 10, in dem das Verfahren gemäß Anspruch 1 verwendet wird.

### Die jeweiligen abhängigen

Ansprüche geben vorteilhafte Weiterbildungen der erfindungsgemäßen Verfahren an.

Erfindungsgemäß wird ein Verfahren zur Laserbearbeitung einer Oberfläche angegeben, in welchem ein Laserstrahl mittels eines Laserscanners über die Oberfläche geführt wird. Gleichbedeutend tastet also vorzugsweise der Laserstrahl mittels des Laserscanners die Oberfläche ab. Hierbei kann eine Bearbeitung der Oberfläche durch den auf die Oberfläche treffenden Laserstrahl erfolgen.

Erfindungsgemäß wird die Oberfläche in einer Mehrzahl oder Vielzahl aufeinanderfolgender Repositionierungsvorgänge gegenüber dem Laserscanner verschoben und/oder gedreht. Der Bereich, in welchem der Laserscanner den Laserstrahl ablenken kann ist normalerweise begrenzt. Durch das Verschieben und/oder Drehen der Oberfläche gegenüber dem Laserscanner wird die Bearbeitung größerer Oberflächen ermöglicht. In jedem Repositionierungsvorgang kann ein anderer Bereich der Oberfläche in den vom Laserscanner erreichbaren Bereich geschoben und/oder gedreht werden.

Die Repositionierung der Oberfläche gegenüber dem Laserscanner kann durch eine Verschiebung des Werkstücks, vorzugsweise eine ebene Verschiebung in zur bearbeitenden Oberfläche parallelen Richtungen, erfolgen, sie kann aber auch durch Drehung des Werkstücks bewirkt werden. Vorteilhafterweise erfolgt dabei die Repositionierung so, dass der Laserstrahl auf den in einem gegebenen Repositionierungsvorgang zu bearbeitenden Bereich der Oberfläche möglichst in einem vorgegebenen Winkelbereich um 90° trifft.

Normalerweise kann der Laserscanner den Laserstrahl entlang eines Richtungsverlaufs zwischen einer Startrichtung und einer Endrichtung ablenken. Der Laserstrahl wird in diesem Fall also stets um einen bestimmten Winkel durch den Laserscanner abgelenkt, so dass er auf der zu bearbeitenden Oberfläche eine vorgegeben Bahn abtastet. Der Abtastvorgang beginnt also mit der Ablenkung des Laserstrahls in die Startrichtung und endet mit Ablenkung des Laserstrahls in die Endrichtung.

Erfindungsgemäß führt der Laserscanner eine solche Ablenkung des Laserstrahls während jedes Repositionierungsvorgangs der Oberfläche jeweils von der Startrichtung bis zur Endrichtung aus. Während jedes Repositionierungsvorganges durchläuft also der Laserstrahl einen vollständigen Richtungsverlauf zwischen der Startrichtung und der Endrichtung. Der Richtungsverlauf kann so vorgegeben werden, dass der Laserstrahl auf der zu bearbeitenden Oberfläche eine gewünschte Bahn abtastet.

Erfindungsgemäß weist jeder der Repositionierungsvorgänge zumindest eine positive Beschleunigungsphase auf, in der eine Geschwindigkeit der Oberfläche relativ zum Laserscanner erhöht wird, sowie eine nach der positiven Beschleunigungsphase ausgeführte negative Beschleunigungsphase, in der die Geschwindigkeit der Oberfläche relativ zum Laserscanner auf Null reduziert wird. Während jedes Repositionierungsvorgangs wird also die Oberfläche gegenüber dem Laserscanner auf eine bestimmte Geschwindigkeit beschleunigt und danach wieder auf Null abgebremst.

Der Laserscanner lenkt den Laserstrahl vorzugsweise so ab, dass dieser während des entsprechenden Repositionierungsvorgangs den Richtungsverlauf von der Startrichtung bis zur Endrichtung durchläuft. Dieses Laserscannen erfolgt insbesondere während der positiven Beschleunigungsphase und der negativen Beschleunigungsphase.

Es werden nun zwei Fälle unterschieden. Zum einen kann es vorkommen, dass der Laserstrahl die Endrichtung erreicht, bevor die Oberfläche in der negativen Beschleunigungsphase die Geschwindigkeit Null erreicht hat. In diesem Fall beginnt die positive Beschleunigungsphase, des darauf folgenden Repositionierungsvorgangs bzw. die Geschwindigkeitserhöhung in dieser positiven Beschleunigungsphase, nach Erreichen, vorzugsweise unmittelbar nach Erreichen, der Geschwindigkeit Null in der negativen Beschleunigungsphase des aktuellen Repositionierungsvorganges.

Wird andererseits die Geschwindigkeit Null in der negativen Beschleunigungsphase des aktuellen Repositionierungsvorgangs erreicht, bevor der Laserstrahl die Endrichtung erreicht hat, so beginnt die Geschwindigkeitserhöhung in der positiven Beschleunigungsphase des darauf folgenden Repositionierungsvorgangs zu oder nach jenem Zeitpunkt, zu dem der Laserstrahl die Endrichtung erreicht.

Durch das erfindungsgemäße Vorgehen wird erreicht, dass die Repositionierung der Oberfläche und der Laserscanner stets synchronisiert sind. Der durch die simultane Bewegung beider Systeme auf der Oberfläche resultierende Ortsfehler wird durch das erfindungsgemäße Vorgehen reduziert.

Oftmals werden mehrere Repositionierungsvorgänge benötigt, um eine Oberfläche durchgängig zu bearbeiten. In diesem Fall führt vorteilhafterweise der Laserscanner unmittelbar nach Erreichen der Endrichtung im vorangegangenen Repositionierungsvorgang den Richtungsverlauf beginnend mit der Startrichtung bis zur Endrichtung erneut aus. Besonders bevorzugt erfolgt dies so oft, wie Repositionierungsvorgänge notwendig sind, um den gesamten zu bearbeitenden Bereich der Oberfläche zu bearbeiten.

In einer vorteilhaften Ausgestaltung der Erfindung kann der Laserscanner zu einem Zeitpunkt, zu dem der Laserstrahl die Endrichtung erreicht, ein Triggersignal senden. Wird in der negativen Beschleunigungsphase des aktuellen Repositionierungsvorgangs die Geschwindigkeit Null erreicht bevor der Laserstrahl die Endrichtung erreicht hat, kann dann die Geschwindigkeitserhöhung in der positiven Beschleunigungsphase des darauf folgenden Repositionierungsvorgangs zu oder nach einem Zeitpunkt beginnen, zu dem das Triggersignal gesendet wird, bzw. von einer die Verschiebung und/oder Rotation der Oberfläche in den Repositionierungsvorgängen ausführenden Repositionierungsvorrichtung empfangen wird. Für alle praktischen Belange kann hier davon ausgegangen werden, dass das Senden und das Empfangen des Triggersignals gleichzeitig erfolgt.

Vorteilhafterweise wird die Synchronisierung so ausgeführt, dass stets der Beginn der Geschwindigkeitserhöhung in der positiven Beschleunigungsphase mit der Ablenkung des Laserstrahls in die Startrichtung zeitlich zusammenfällt. Die Ablenkung des Laserstrahls entlang des Richtungsverlaufs beginnt also an der Startrichtung zu einem Zeitpunkt, zu dem die Erhöhung der Geschwindigkeit in der positiven Beschleunigungsphase beginnt und die Erhöhung der Geschwindigkeit in der positiven Beschleunigungsphase beginnt zu einem Zeitpunkt, zu dem die Ablenkung des Laserstrahls entlang des Richtungsverlaufs an der Startrichtung beginnt.

Störungen an Übergängen zwischen Bereichen der Oberfläche, die in aufeinander folgenden Repositionierungsvorgängen bearbeitet werden, können besonders gut vermieden werden, wenn die Geschwindigkeitsverringerung in der negativen Beschleunigungsphase sich über einen möglichst langen Zeitraum erstreckt. Vorteilhafterweise dauert daher die Reduzierung der Geschwindigkeit während der negativen Beschleunigungsphase zumindest 0,25 % der Zeit zwischen dem vorausgegangen Erreichen der Endrichtung und dem folgenden Erreichen der Endrichtung durch den Laserscanner. Besonders bevorzugt dauert die Reduzierung der Geschwindigkeit zumindest 1 %, besonders bevorzugt zumindest 5 %, besonders bevorzugt zumindest 8 %, besonders bevorzugt zumindest 10 %, besonders bevorzugt zumindest 15 %, besonders bevorzugt zumindest 30 %, besonders bevorzugt zumindest 50 % der Zeit zwischen dem vorausgegangen Erreichen der Endrichtung und dem folgenden Erreichen der Endrichtung.

Vorteilhafterweise erfolgt dabei die Reduzierung der Geschwindigkeit während der negativen Beschleunigungsphase streng monoton.

In einer vorteilhaften Ausgestaltung der Erfindung kann im unmittelbaren Anschluss an das Erreichen der Geschwindigkeit Null in der negativen Beschleunigungsphase eine Wartephase vorgesehen werden, die vorzugsweise vom Erreichen der Geschwindigkeit Null bis zum Zeitpunkt des Erreichens der Endrichtung durch den Laserstrahl dauert. Die Wartezeit kann vorzugsweise so bemessen werden, dass die negative Beschleunigungsphase auf jeden Fall abgeschlossen ist, bevor der Laser die Endrichtung erreicht. Vorteilhafterweise wird diese Wartephase so lange gewählt, wie die maximale erwartete Zeitdifferenz zwischen dem Erreichen der Geschwindigkeit Null in der negativen Beschleunigungsphase und dem Erreichen der Endrichtung durch den Laserstrahl in einem gegebenen Repositionierungsvorgang beträgt. Es kann hierdurch sichergestellt werden, dass eine Synchronisierung des Beginns des Richtungsverlaufs mit dem Beginn der Geschwindigkeitserhöhung in der positiven Beschleunigungsphase möglich ist.

Vorzugsweise lenkt der Laserscanner den Laserstrahl ununterbrochen, also ohne Pause, ab und beginnt den Scan an der Startrichtung unmittelbar nach erreichen der Endrichtung. Wird die Wartezeit wie beschrieben vorgesehen, kann ausgeschlossen werden, dass der Laserscanner bereits zu einem Zeitpunkt mit der Ablenkung des Laserstrahls in der Startrichtung beginnt, zu dem sich der Repositionierungsvorgang noch in der negativen Beschleunigungsphase befindet. Ein solcher Fehler würde sich nämlich über mehrere Repositionierungsvorgänge aufsummieren, da der Laserscanner den Scan in jedem Vorgang noch früher beenden würde.

In einer vorteilhaften Ausgestaltung der Erfindung können ein Teil oder alle der Repositionierungsvorgänge nach Abschluss der jeweiligen positiven Beschleunigungsphase und vor Beginn der jeweiligen negativen Beschleunigungsphase eine Phase konstanter Geschwindigkeit aufweisen, während welcher die Oberfläche gegenüber dem Laserscanner mit konstanter Geschwindigkeit bewegt wird. Durch das Vorsehen einer solchen Phase konstanter Geschwindigkeit kann das erforderliche Geschwindigkeitsmaximum zum Erreichen des vorgegebenen Ortes in der vorgegeben Zeit reduziert werden.

Das erfindungsgemäße Verfahren kann vorteilhaft auf gekrümmte Oberflächen angewandt werden. Dabei kann die gekrümmte Oberfläche in den Repositionierungsvorgängen jeweils in einer Richtung verschoben werden, die in einem Punkt, der innerhalb des Bereichs zwischen Startrichtung und Endrichtung der Ablenkung des Laserstrahls liegt, parallel zur Oberfläche ist. Eine in der Verschieberichtung verlaufende Gerade kann also die Oberfläche in diesem Punkt tangential berühren.

Vorteilhafterweise kann die Beschleunigung in der positiven Beschleunigungsphase konstant sein. Vorteilhafterweise kann auch die negative Beschleunigung in der negativen Beschleunigungsphase konstant sein.

Wie vorstehend beschrieben ist das erfindungsgemäße Verfahren vorteilhaft auch auf gekrümmte Oberflächen anwendbar. Für gekrümmte Oberflächen ist es vorteilhaft, wenn ein Scanfeld des Laserscanners an die Orientierung des zu bearbeitenden Bereiches der Oberfläche angepasst werden kann. Normalerweise wird zur Ausrichtung eines Werkstücks gegenüber einem Laserscanner eine Haltevorrichtung verwendet, mittels derer das Werkstück in fünf Freiheitsgraden orientiert werden kann.

Vorzugsweise wird zur Bearbeitung ein Laserscanner in Kombination mit einer 5-Achs-Werkzeugmaschine (drei Linearachsen, zwei Drehachsen) verwendet (siehe Anspruch 10), die eine Repositionierung der Oberfläche in drei Translationsfreiheitgraden und zwei Rotationsfreiheitsgraden ermöglicht. Gängige Steuerungen besitzen eine Transformation, die es erlaubt ein NC-Programm direkt im Werkstückkoordinatensystem zu programmieren. Um eine Orientierung im Raum allgemein zu beschreiben, sind sechs Freiheitsgrade nötig. Dies führt dazu, dass mit den vorhandenen fünf mechanischen Achsen es zwar möglich ist, einen beliebigen Punkt auf dem Werkstück mit dem Werkzeug unter einer vorgegebenen Richtung (Werkzeugvektor genannt) anzufahren, aber eine Drehung um diesen Werkzeugvektor kann nicht ausgeführt werden. Das heißt, bis auf die Richtung kann die Orientierung zwischen Werkzeug und Werkstück nicht beeinflusst werden. Beim Fräsen, wo das Werkzeug in der Regel rotationssymmetrisch ist, spielt die Drehung um das Werkzeug keine Rolle. Der Laserscanner, dessen Scanfeld nicht rotationssymmetrisch ist, muss demensprechend an die Orientierung des Werkstücks in der Maschine angepasst werden. Damit die Maschine diese Drehung ausführen kann, wird eine weitere Achse benötigt.

Erfindungsgemäß (siehe Anspruch 10) wird daher ein Verfahren zur Laserbearbeitung einer Oberfläche eines Werkstücks mittels eines Laserscanners angegeben, das eine Anpassung der Orientierung des Scanfeldes auch an um besagte Achse verdrehte Oberflächenbereiche ermöglicht. Es wird hierbei ein Laserscanner eingesetzt, der einen Encoder-Eingang zur virtuellen Drehung einer Ablenkung des Laserstrahls aufweist. Das Encoder-Signal steuert dabei die Ablenkung des Laserstrahls, das heißt die Drehung der Scantrajektorie in zwei zueinander senkrecht stehende Richtungen, die die Ebene des Scanfelds aufspannen, also beispielsweise die Drehung in der xy-Ebene um die z-Achse (Richtung der Laserstrahlung).

Erfindungsgemäß wird nun dem Encoder-Eingang des Laserscanners ein Steuersignal eingegeben, dass eine Drehung des Scanfelds des Laserscanners in einem sechsten Freiheitsgrad um eine zum Scanfeld senkrechte Achse, bewirkt. Durch dieses Signal wird also das Scanfeld so gedreht, dass es mit der Orientierung des zu bearbeitenden Bereiches der Oberfläche um diese Achse übereinstimmt. Hierdurch ist es möglich, ein gegenüber der zu bearbeitenden Oberfläche festes Koordinatensystem stets mit einem Koordinatensystem des Laserscanners in Übereinstimmung zu bringen. Auf diese Weise kann ein Muster, mit welchem die Oberfläche des Werkstücks zu bearbeiten ist, unabhängig von der Geometrie und der Befestigung des Werkstücks an der Haltevorrichtung, immer im Koordinatensystem der zu bearbeitenden Oberfläche angegeben werden und vom Laserscanner in diesem bearbeitet werden.

In einer vorteilhaften Ausgestaltung der Erfindung kann die Orientierung der zu bearbeitenden Oberfläche vor der Bearbeitung mittels einer Messvorrichtung bestimmt werden. Entsprechend dem Ergebnis dieser Orientierungsbestimmung kann dann das Werkstück mittels der fünf Achsen der Haltevorrichtung oder Maschine und der Drehung des Scanfelds durch die beschriebene Ansteuerung des Encoders relativ zum Laserscanner ausgerichtet werden. Gemäß der Erfindung wird die Repositionierungsvorgänge im oben beschriebenen Verfahren mittels des vorstehend beschriebenen Verfahrens durchgeführt (siehe Anspruch 10). Auf diese Weise kann eine Oberfläche mit einem Programm, welches direkt im Werkstückkoordinatensystem programmiert ist, durchgängig bearbeitet werden.

Im Folgenden sollen die erfindungsgemäßen Verfahren anhand einiger Figuren beispielhaft erläutert werden. Gleiche Bezugszeichen kennzeichnen dabei gleiche oder entsprechende Merkmale. Die in den Beispielen beschriebenen Merkmale können auch unabhängig vom konkreten Beispiel realisiert sein und unter den Beispielen kombiniert werden.

Es zeigt:
- Figur 1:: eine Ansteuerung eines Laserscanners,
- Figur 2:: eine mäanderförmige Laserbearbeitung mittels eines Laser-scanners bei gleichzeitigem Vorschub der zu bearbeitenden Oberfläche,
- Figur 3:: einen Geschwindigkeits- und Ortsverlauf bei konstanter Vorschubgeschwindigkeit der Oberfläche,
- Figur 4:: auftretende Fehler bei Abweichungen zwischen dem Laserscan und der Bewegung der Oberfläche,
- Figur 5:: eine Mehrzahl aufeinander folgender Repositionierungsvorgänge im erfindungsgemäßen Verfahren,
- Figur 6:: einen beispielhaften einzelnen Repositionierungsvorgang im erfindungsgemäßen Verfahren,
- Figur 7:: eine Ausrichtung eines Werkstücks in einer fünfachsigen Haltevorrichtung bei unterschiedlicher Einspannung des Werkstücks, und
- Figur 8:: eine schematische Darstellung eines Systems, mit dem im erfindungsgemäßen Verfahren eine Orientierung einer zu bearbeitenden Oberfläche mit einer Orientierung eines Scanfeldes in Übereinstimmung gebracht werden kann.

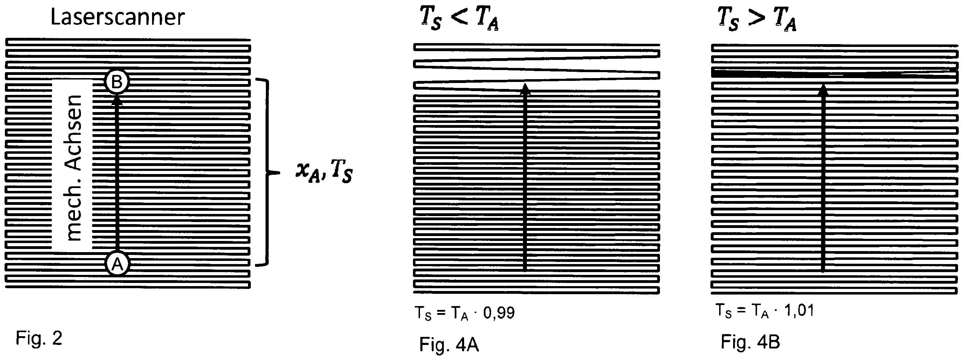

Eine typische Aufgabe bei einer flächigen Materialbearbeitung ist es, einen Laserstrahl in Form eines Mäanders über eine zu bearbeitende Oberfläche zu führen. Hierbei lenkt ein Laserscanner den Laserstrahl in einer schnellen Bewegung entlang eines Richtungsverlaufs zwischen einer Startrichtung und einer Endrichtung ab, während die Oberfläche mittels mechanischer Achsen von einem Punkt A zu einem Punkt B repositioniert wird (Eine solche Repositionierung kann im allgemeinen Verschiebung und/oder Repositionierung enthalten). Diese Situation ist in Figur 2 gezeigt. Im in Figur 2 gezeigten Verfahren beginnt zunächst der Laserscanner die Ablenkung des Laserstrahls entlang des Richtungsverlaufs an der Startrichtung. Zu einem Zeitpunkt, zu dem der Laserscanner eine Zwischenrichtung erreicht, beginnt eine Repositionierungsvorrichtung, die Oberfläche gegenüber dem Laserscanner zu verschieben. Dies ist in Figur 2 mit A gekennzeichnet. Die Verschiebung erfolgt dabei bis zu einem Punkt B. Der Laserscanner kann auch nach Vollendung des Repositionierungsvorgangs noch den Laserstrahl noch bis zur Endrichtung ablenken.

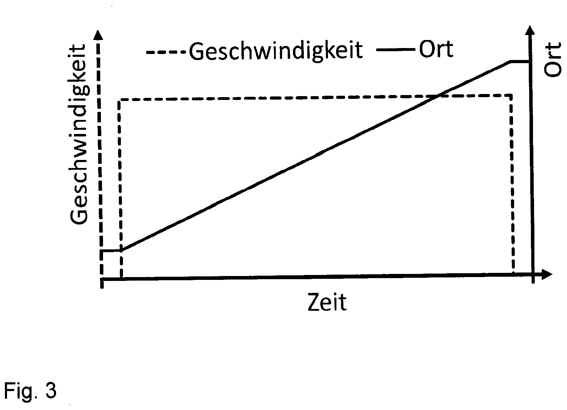

Figur 3 zeigt beispielhaft einen Geschwindigkeitsverlauf (gestrichelte Linie) und einen Ortsverlauf (durchgezogene Linie) des in Figur 2 gezeigten Repositionierungsvorgangs.

Idealerweise sollte der Repositionierungsvorgang der Oberfläche durch die mechanischen Achsen und der Scanvorgang des Laserscanners perfekt synchronisiert sein, so dass der Laserstrahl zu Beginn des Repositionierungsvorgangs und am Ende des Repositionierungsvorgangs gerade einen genau vorgegeben Punkt durchläuft. In der Praxis ist es jedoch so, dass der Repositionierungsvorgang und der Scanvorgang nicht exakt in Übereinstimmung zu bringen sind. Wird die Verschiebung der Oberfläche mit einem Geschwindigkeitsprofil durchgeführt, wie es in Figur 3 gezeigt ist, so können die in Figur 4 A und 4 B gezeigten Fehler auftreten. Ist die Dauer des Scanvorgangs kürzer als es einer exakten Übereinstimmung mit dem Repositionierungsvorgang entspräche, so tritt der in Figur 4A gezeigte Fehler auf. Der Repositionierungsvorgang hat hier gegen Ende des Scanvorgangs noch einen zu großen Weg zurückzulegen, so dass die Mäander im Endbereich des Scanvorgangs gestreckt sind.

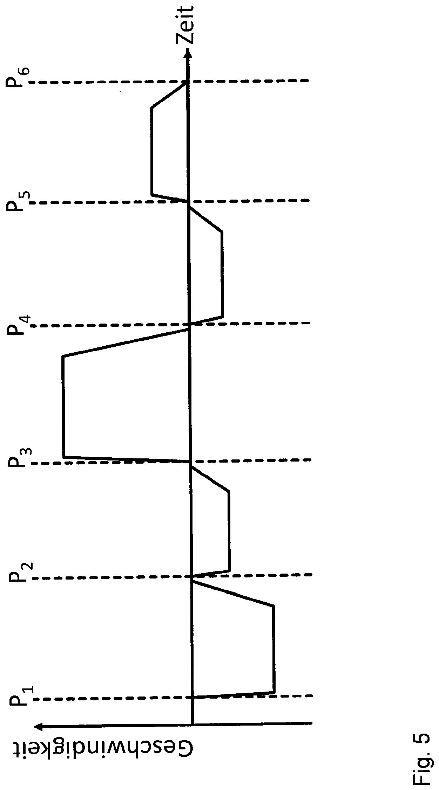

Dauert andererseits der Scanvorgang länger, als es einer exakten Übereinstimmung mit dem Repositionierungsvorgang entspräche, so tritt der in Figur 4B gezeigte Fehler auf. Hier führt der Scanner noch zusätzliche Mäanderbewegungen aus, während der Repositionierungsvorgang bereits beendet ist. Auf diese Weise werden, wie in Figur 4B zu erkennen, die Mäander im Endbereich des Scanvorgangs aufeinandergeschoben. Diese Fehler können erfindungsgemäß verringert werden, wenn die Oberfläche in einer Mehrzahl von Repositionierungsvorgängen repositioniert wird, die ein erfindungsgemäßes Geschwindigkeitsprofil aufweisen. Ein solcher Repositionierungsverlauf ist beispielhaft in Figur 5 gezeigt. Es liegen im hier gezeigten Beispiel fünf Repositionierungsvorgänge vor, die jeweils zu den Zeitpunkten P₁, P₂, P₃, P₄ und P₅ beginnen.

In Figur 5 ist auf der horizontalen Achse die Zeit aufgetragen und auf der vertikalen Achse die Geschwindigkeit der Oberfläche gegenüber dem Laserscanner. Es ist zu erkennen, dass jeder Repositionierungsvorgang mit einer Geschwindigkeit Null der Oberfläche gegenüber dem Laserscanner beginnt und die Geschwindigkeit Null wieder erreicht. Auf diese Weise kann über einen langen Zeitraum eine Synchronisation des Laserscanners mit der Verschiebung der Oberfläche sichergestellt werden.

In Figur 5 ist zu erkennen, dass die Verschiebung nicht notwendigerweise nur in einer Vorwärtsrichtung erfolgen muss. Es ist auch möglich, die Oberfläche beispielsweise hin und her zu verschieben. Auch eine Verschiebung der Oberfläche in zueinander nicht senkrechte Richtungen parallel zu einem Scanfeld des Laserscanners ist möglich.

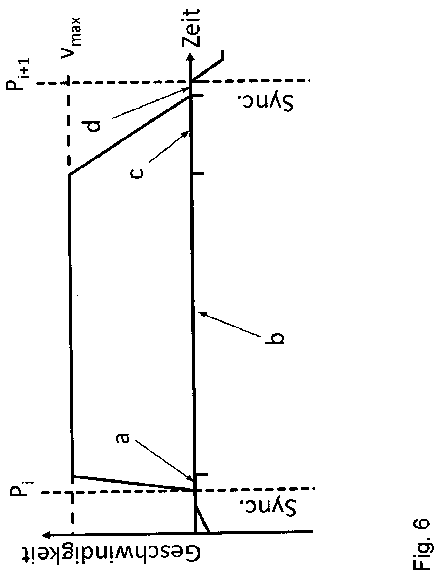

Figur 6 zeigt beispielhaft einen einzelnen Repositionierungsvorgang wie er auch in Figur 5 eingesetzt werden könnte. Der beispielhafte Geschwindigkeitsverlauf des in Figur 6 gezeigten Repositionierungsvorgangs weist zunächst eine positive Beschleunigungsphase a auf, in der die Geschwindigkeit der Oberfläche relativ zum Laserscanner erhöht wird. Im gezeigten Beispiel wird die Geschwindigkeit in diesem positiven Beschleunigungsvorgang auf eine Maximalgeschwindigkeit vₘₐₓ erhöht. Die Dauer der Phase positiver Beschleunigung kann kurz sein, da die Synchronisation zwischen Scanner und Verschiebung unmittelbar vorausgeht. Sie kann z.B. keiner 5 % oder kleiner 1 %, der Gesamtzeit des Repositionierungsvorgangs betragen. Der in Figur 6 gezeigte Geschwindigkeitsverlauf weist dann eine Phase konstanter Geschwindigkeit b auf, während derer die Oberfläche mit der konstanten Maximalgeschwindigkeit Vₘₐₓ gegenüber dem Laserscanner verschoben wird. Es sei darauf hingewiesen, dass diese Phase konstanter Geschwindigkeit b optional ist.

Auf die Phase konstanter Geschwindigkeit folgt hier zeitlich nach der Phase positiver Beschleunigung a eine Phase negativer Beschleunigung c, in welcher die Oberfläche gegenüber dem Laserscanner auf eine Geschwindigkeit von 0 abgebremst wird. Es ist zu erkennen, dass die Phase negativer Beschleunigung mehr als 15 % der Gesamtzeit dieses Repositionierungsvorgangs ausmacht.

Die Oberfläche wird also verhältnismäßig langsam abgebremst. Hierdurch können die in Figur 4A und B gezeigten Fehler deutlich vermindert bzw. ganz vermieden werden.

Auf die negative Beschleunigungsphase c folgt im in Figur 6 gezeigten Beispiel eine optionale Wartephase d, während derer sich die Oberfläche gegenüber dem Laserscanner nicht bewegt. Die Wartephase endet mit Beginn des Beschleunigungsvorgangs des darauf folgenden Repositionierungsvorgangs. Die Geschwindigkeitserhöhung in der positiven Beschleunigungsphase kann jeweils durch ein vom Laserscanner ausgesandtes Synchronisationssignal eingeleitet werden, das der Laserscanner zu einem Zeitpunkt erzeugt, zu dem der Laserstrahl in die Endrichtung des Richtungsverlaufes, den der Laserscanner abfährt, abgelenkt wird. Alternativ kann die Geschwindigkeitserhöhung mit Ende der Wartephase beginnen.

Die Geschwindigkeit steigt bzw. fällt in den in Figur 6 gezeigten Beschleunigungsphasen streng monoton und insbesondere mit konstanter Beschleunigung. Auch andere Geschwindigkeitsverläufe sind denkbar.

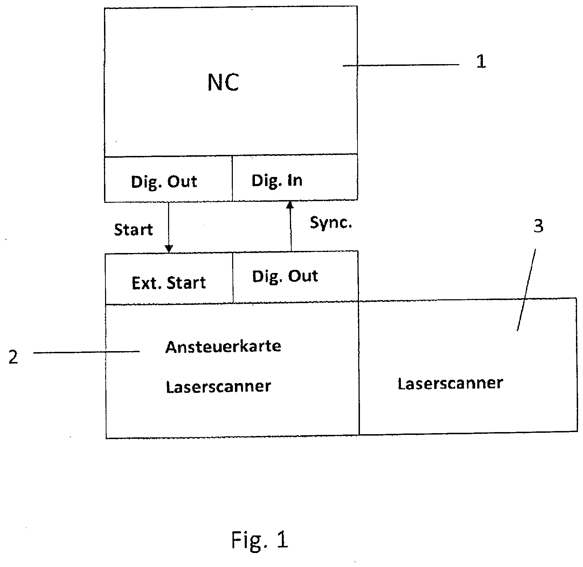

Figur 1 zeigt beispielhaft eine Ansteuerung eines Laserscanners. Hierbei ist eine Steuereinheit 1 (Numerial Control) mit einer Ansteuerkante 2 eines Laserscanners 3 verbunden. Die Steuereinheit 1 kann ein Startsignal an der Ansteuerkante des Laserscanners eingeben, das den Laserscanner veranlasst, den Laserstrahl entlang eines Richtungsverlaufs mit einer Startrichtung zu beginnen. Dieses Signal wird nur einmalig zum Anfang der Bearbeitung gesendet, um den Start des Scanprogamms zu triggern und ist optional, da die mechanischen Achsen bis zum ersten Zeitpunkt P₁ stillstehen. Darüber hinaus kann der Laserscanner 3 über die Ansteuerkante 2 ein Synchronisationssignal an die Steuereinheit 1 senden, sobald der Laserscanner die Endrichtung erreicht hat. Für das Startsignal weist die Ansteuerkante 2 einen entsprechenden Eingang auf und für das Synchronisationssignal einen entsprechenden Ausgang. Entsprechend weist die Steuereinheit 1 einen Ausgang für das Startsignal und einen Eingang für das Synchronisationssignal auf.

Die Steuereinheit 1 kann außerdem eine nicht gezeigte Repositionierungsvorrichtung steuern, mittels derer eine zu bearbeitende Oberfläche gegenüber dem Laserscanner verschoben und/oder umorientiert wird. Das vom Laserscanner 3 an die Steuereinheit 1 ausgesandte Synchronisationssignal bei Erreichen der Endrichtung kann diese verwenden, um einen Repositionierungsvorgang der Oberfläche zu initialisieren. Auf diese Weise können Laserscanner und Repositionierungsvorrichtung synchronisiert werden.

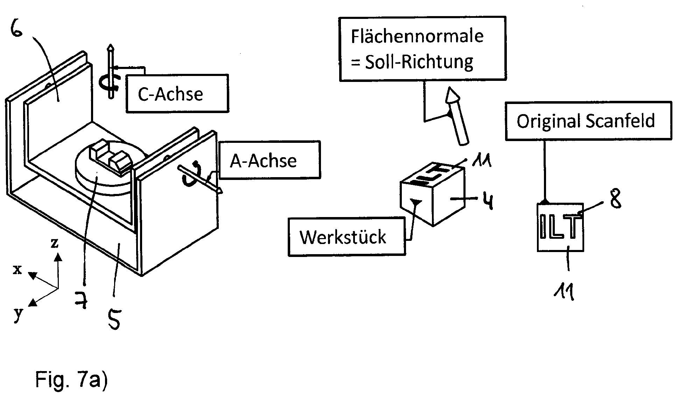

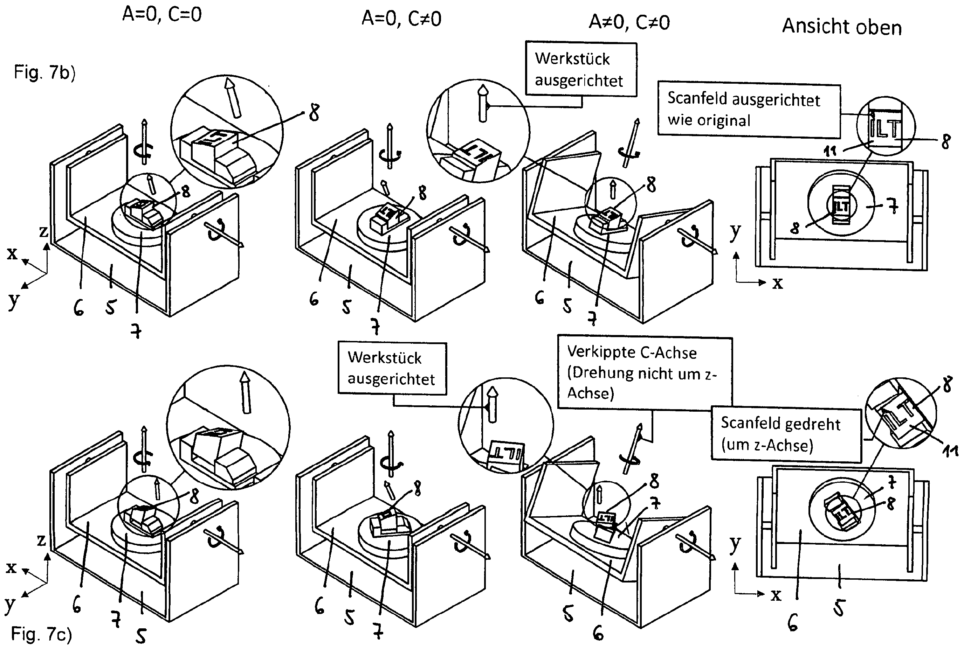

Figur 7 zeigt beispielhaft eine Haltevorrichtung (Dreh-Kipp-Tisch) einer fünf-Achs-Maschine, mit der ein Bauteil gegenüber einem Laserscanner ausrichtbar ist. Es soll die Haltevorrichtung anhand der in den Figuren eingezeichneten Koordinaten beschrieben werden. Die Koordinaten x und y spannen dabei eine untere Fläche auf, auf der die z-Richtung senkrecht steht. Die gezeigte Haltevorrichtung weist ein äußeres Element 5 auf, das um eine zur z-Achse parallele Achse drehbar ist. In diesem Element 5 ist ein schwenkbares Element 6 um eine zur x-Achse parallele Achse schwenkbar aufgehängt. Auf dem Element 6 ist ein drehbarer Teller 7 angeordnet, der um eine zu jener Achse senkrechte Richtung drehbar ist, um welche das Element 6 schwenkbar ist und die in einem konstanten Winkel zum schwenkbaren Element 6 steht. Auf diesem Teller ist das Bauteil 4 eispannbar. Figur 7a) zeigt die Einzelkomponenten.

Figur 7b) zeigt, wie das Bauteil 4 in die Haltevorrichtung eingespannt sein kann. Wie in Figur 7a) zu erkennen ist, hat das Bauteil eine rechteckige Grundfläche mit darauf senkrecht stehenden Seitenflächen und eine gegenüber der Grundfläche gekippte Oberfläche 11, die um eine zu einer der Kanten der Grundfläche parallele Achse gekippt ist.

Wird das Werkstück 4 wie in Figur 7b) gezeigt in die Haltevorrichtung eingespannt, so kann durch Drehen der Elemente 5, 6 und 7 der Haltevorrichtung die zu bearbeitenden Oberfläche 11, die in den Figuren durch den Schriftzug ILT gekennzeichnet ist, so ausgerichtet werden, dass sie parallel zu einem Scanfeld des Laserscanners liegt und wie dieses orientiert ist. Es kann dabei angenommen werden, dass der Laserscanner so eingerichtet ist, dass sein Scanfeld wie das rechts in Figur 7b) gezeigte Scanfeld orientiert ist.

Anders stellt sich die Situation dar, wenn das Bauteil 4 wie in Figur 7c) gezeigt in die Haltevorrichtung eingespannt wird. In diesem Fall ist es zwar möglich, durch Drehen der Bauteile 5, 6 und 7 die zu bearbeitende Oberfläche 11 des Bauteils 4 zum Scanfeld des Laserscanners parallel auszurichten, die Oberfläche 11 des Bauteils 4 weist jedoch gegenüber dem Scanfeld des Laserscanners eine gedrehte Orientierung auf.

Es kann nun durch Eingeben eines geeigneten Encodersignals an den Laserscanner dessen Scanfeld um eine zum Scanfeld senkrechte Achse so gedreht werden, dass das Scanfeld mit der Orientierung der Oberfläche des Bauteils 4 auch dann übereinstimmt, wenn dieses wie in Figur 7c) gezeigt eingespannt ist. Effektiv bewirkt also der Laserscanner auf diese Weise eine zusätzliche Drehung, die durch die Haltevorrichtung nicht zur Verfügung gestellt werden kann.

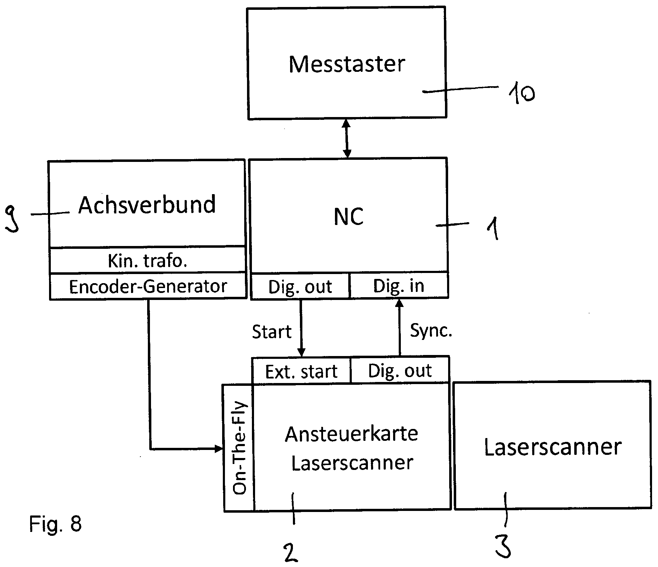

Figur 8 zeigt schematisch einen Aufbau, mittels dessen das erfindungsgemäße Verfahren mit einer Haltevorrichtung wie in Figur 7 gezeigt ausführbar ist. Wie in Figur 1 weist die Verschaltung 4 eine Steuereinheit 1 auf, die mit einer Ansteuerkante 2 eines Laserscanners 3 verbunden ist und von dieser ein Synchronisationssignal empfangen kann und an diese ein Startsignal senden kann. Die Steuereinheit 1 ist darüber hinaus mit einem Achsverbund 9 verbunden, der eine Bewegung der Elemente 5, 6 und 7, wie in Figur 7 gezeigt, bewirken kann.

Erfindungsgemäß kann das System so realisiert sein, dass die Steuereinheit 1 den Achsverbund 9 so anspricht, als könne dieser das Bauteil in sechs Freiheitsgraden positionieren. Tatsächlich kann, wie in Figur 7 gezeigt, die mechanische Vorrichtung mit den Elementen 5, 6 und 7 das Bauteil nur in fünf Freiheitsgraden positionieren. Es kann jedoch eine virtuelle sechste Achse bzw. ein virtueller sechster Freiheitsgrad dadurch realisiert werden, dass der Laserscanner 3 an seiner Ansteuerkante 2 an deren "on the fly"-Eingang ein Encodersignal vom Achsverbund 9 empfängt, mittels dessen das Scanfeld des Laserscanners um eine zu diesem Scanfeld senkrechte Achse gedreht wird. Dieses Vorgehen ist vor allem deshalb vorteilhaft, weil auf diese Weise in der Steuereinheit keine Vorrichtungen getroffen werden müssen, um das Scanfeld an der zu bearbeitenden Oberfläche auszurichten. Vielmehr kann die Steuereinheit 1 eine Steuerung vornehmen als stünden sechs Freiheitsgrade zur Positionierung des zu bearbeitenden Werkstücks zur Verfügung. Es kann daher nahezu jede beliebige Form eines Werkstücks direkt in den Werkstückkoordinaten programmiert werden. Dazu muss die Steuereinheit 1 weder verändert noch eine weitere mechanische Achse installiert werden.

Optional kann das System auch einen Messtaster 10 aufweisen, mit dem eine Orientierung des Werkstücks bestimmbar ist. Die Ausrichtung des Werkstücks kann dann basierend auf den Messergebnissen des Messtasters 10 erfolgen.

## Patentansprüche

1. Verfahren zur Laserbearbeitung einer Oberfläche,
wobei
ein Laserstrahl mittels eines Laserscanners über die Oberfläche geführt wird
und die Oberfläche in einer Mehrzahl aufeinanderfolgender Repositionierungsvorgänge gegenüber dem Laserscanner verschoben und/oder gedreht wird,
wobei während jedes Repositionierungsvorganges der Laserstrahl durch den Laserscanner entlang eines Richtungsverlaufes zwischen einer Startrichtung und einer Endrichtung über die Oberfläche abgelenkt wird, **dadurch gekennzeichnet, dass** die Oberfläche während jedes Repositionierungsvorganges zumindest in einer positiven Beschleunigungsphase, in der eine Geschwindigkeit der Oberfläche relativ zum Laserscanner erhöht wird, und einer nach der positiven Beschleunigungsphase ausgeführten negativen Beschleunigungsphase, in der die Geschwindigkeit der Oberfläche relativ zum Laserscanner auf Null reduziert wird, bewegt wird, und wobei,
wenn in der negativen Beschleunigungsphase die Geschwindigkeit Null erreicht wird, bevor der Laserstrahl die Endrichtung erreicht hat, die Geschwindigkeitserhöhung in der positiven Beschleunigungsphase des darauffolgenden Repositionierungsvorgangs zu einem Zeitpunkt beginnt, zu dem der Laserstrahl die Endrichtung erreicht und,
wenn in der negativen Beschleunigungsphase die Geschwindigkeit Null erreicht wird, nachdem der Laserstrahl die Endposition erreicht hat, die Geschwindigkeitserhöhung in der positiven Beschleunigungsphase des darauffolgenden Repositionierungsvorganges unmittelbar nach dem Erreichen der Geschwindigkeit Null beginnt.

2. Verfahren nach dem vorhergehenden Anspruch, wobei ein der Laserscanner zu einem Zeitpunkt, zu dem der Laserstrahl die Endrichtung erreicht, ein Triggersignal sendet, und, wenn in der negativen Beschleunigungsphase die Geschwindigkeit Null erreicht wird, bevor der Laserstrahl die Endrichtung erreicht hat, die Geschwindigkeitserhöhung in der positiven Beschleunigungsphase des darauffolgenden Repositionierungsvorgangs zu oder nach einem Zeitpunkt beginnt, zu dem das Triggersignal gesendet wird.

3. Verfahren nach einem der vorhergehenden Ansprüche, wobei die Ablenkung des Laserstrahls entlang des Richtungsverlaufs an der Startrichtung gleichzeitig zu einem Zeitpunkt beginnt, zu dem die Erhöhung der Geschwindigkeit in der positiven Beschleunigungsphase beginnt.

4. Verfahren nach dem vorhergehenden Anspruch,
wobei die Reduzierung der Geschwindigkeit während der negativen Beschleunigungsphase zumindest 0,25 % der Zeit zwischen dem vorausgegangenen Erreichen der Endrichtung und dem folgenden Erreichen der Endrichtung dauert.

5. Verfahren nach dem vorhergehenden Anspruch,
wobei die Reduzierung der Geschwindigkeit zumindest 1 %, vorzugsweise zumindest 5 %, vorzugsweise zumindest 8 %, vorzugsweise zumindest 10 %, vorzugsweise zumindest 15 %, vorzugsweise zumindest 30 %, vorzugsweise zumindest 50 % der Zeit zwischen dem vorausgegangenen Erreichen der Endrichtung und dem folgenden Erreichen der Endrichtung dauert.

6. Verfahren nach einem der vorhergehenden Ansprüche,
wobei der Repositionierungsvorgang eine Wartephase im unmittelbaren Anschluss an das Erreichen der Geschwindigkeit Null in der negativen Beschleunigungsphase aufweist, die bis zum Zeitpunkt des nächsten Erreichens der Endrichtung dauert.

7. Verfahren nach einem der vorhergehenden Ansprüche,
wobei der Repositionierungsvorgang nach Abschluss der positiven Beschleunigungsphase und vor Beginn der negativen Beschleunigungsphase eine Phase konstanter Geschwindigkeit aufweist, während welcher die Oberfläche gegenüber dem Laserscanner mit konstanter Geschwindigkeit bewegt wird.

8. Verfahren nach einem der vorhergehenden Ansprüche,
wobei die Oberfläche gekrümmt ist, und im Repositionierungsvorgang jeweils in einer Richtung verschoben wird, die jeweils parallel zur Oberfläche in einem Punkt steht, der innerhalb des Bereiches zwischen Anfangsrichtung und Endrichtung der Ablenkung des Laserstrahls liegt.

9. Verfahren nach einem der vorhergehenden Ansprüche, wobei die Beschleunigung in der positiven Beschleunigungsphase und/oder in der negativen Beschleunigungsphase konstant ist.

10. Verfahren zur Laserbearbeitung einer Oberfläche eines Werkstücks mittels eines Laserscanners, der einen Encoder-Eingang zur Drehung einer Ablenkung eines Laserstrahls um eine virtuelle Drehachse aufweist,
wobei das Werkstück in einer Haltevorrichtung gehalten wird, die ein Positionieren des Werkstücks relativ zum dem Laserscanner mittels fünf Achsen in fünf Freiheitsgraden erlaubt,
und wobei dem Encoder-Eingang des Laserscanners ein Steuersignal eingeben wird, das eine Drehung eines Scanfeldes des Laserscanners in einem sechsten Freiheitsgrad um eine zum Scanfeld senkrechte Achse bewirkt,
wobei durch die Positionierungen in den sechs Freiheitsgraden ein zu bearbeitender Bereich der Oberfläche mit einem Scanfeld des Laserscanners in Übereinstimmung gebracht wird,
wobei ein Verfahren zur Bearbeitung einer Oberfläche nach einem der Ansprüche 1 bis 9 ausgeführt wird und
die Bewegung der Oberfläche in den Repositionierungsvorgängen durch die Drehung um zumindest eine der sechs Achsen bewirkt wird.

## Claims

1. A method for laser-processing a surface,
wherein
a laser beam is guided over the surface by means of a laser scanner
and the surface is displaced and/or rotated with respect to the laser scanner in a plurality of successive repositioning processes,
wherein, during each repositioning process, the laser beam is deflected over the surface by the laser scanner along a direction progression between a starting direction and an end direction, **characterised in that**
during each repositioning process, the surface is moved at least in a positive acceleration phase, in which a speed of the surface relative to the laser scanner is increased, and a negative acceleration phase, which is implemented after the positive acceleration phase and in which the speed of the surface relative to the laser scanner is reduced to zero,
and wherein,
if, in the negative acceleration phase, the zero speed is reached before the laser beam has reached the end direction, the increase in speed in the positive acceleration phase of the subsequent repositioning process commences at a point in time at which the laser beam reaches the end direction and if, in the negative acceleration phase, the zero speed is reached after the laser beam has reached the end position, the increase in speed in the positive acceleration phase of the subsequent repositioning process commences immediately after the reaching of the zero speed.

2. The method according to the preceding claim, wherein one of the laser scanners transmits a trigger signal at a point in time at which the laser beam reaches the end direction and if, in the negative acceleration phase, the zero speed is reached before the laser beam has reached the end direction, the increase in speed in the positive acceleration phase of the subsequent repositioning process commences at or after a point in time at which the trigger signal is transmitted.

3. The method according to one of the preceding claims,
wherein the deflection of the laser beam along the direction progression commences in the starting direction simultaneously with a point in time at which the increase of the speed in the positive acceleration phase commences.

4. The method according to the preceding claim,
wherein the reduction of the speed during the negative acceleration phase continues for at least 0.25% of the time between the previous reaching of the end direction and the following reaching of the end direction.

5. The method according to the preceding claim,
wherein the reduction of the speed continues for at least 1%, preferably at least 5%, preferably at least 8%, preferably at least 10%, preferably at least 15%, preferably at least 30%, preferably at least 50% of the time between the previous reaching of the end direction and the following reaching of the end direction.

6. The method according to one of the preceding claims,
wherein the repositioning process has a waiting phase immediately after the reaching of the zero speed in the negative acceleration phase, which continues up to the point in time of the next reaching of the end direction.

7. The method according to one of the preceding claims,
wherein the repositioning process after the conclusion of the positive acceleration phase and before the commencement of the negative acceleration phase has a phase of constant speed, during which the surface is moved at a constant speed relative to the laser scanner.

8. The method according to one of the preceding claims,
wherein the surface is curved and in the repositioning process is always displaced in a direction which is in each case parallel to the surface at a point which is located within the region between the starting direction and the end direction of the deflection of the laser beam.

9. The method according to one of the preceding claims,
wherein the acceleration in the positive acceleration phase and/or in the negative acceleration phase is constant.

10. A method for laser-processing a surface of a workpiece by means of a laser scanner, which has an encoder input for rotating a deflection of a laser beam about a virtual axis of rotation,
wherein the workpiece is held in a holding device which enables positioning of the workpiece relative to the laser scanner by means of five axes in five degrees of freedom,
and wherein a control signal is supplied to the encoder input of the laser scanner, which control signal effects a rotation of a scanning field of the laser scanner in a sixth degree of freedom about an axis perpendicular to the scanning field,
wherein, as a result of the positionings in the six degrees of freedom, a region of the surface which is to be processed is brought in accordance with a scanning field of the laser scanner,
wherein a method for processing a surface according to one of claims 1 to 9 is implemented and
the movement of the surface in the repositioning processes is effected by the rotation about at least one of the six axes.

## Revendications

1. Procédé d'usinage laser d'une surface,
un rayon laser étant guidé au moyen d'un scanner laser au-dessus de la surface,
et la surface étant déplacée et/ou tournée dans une pluralité de processus de repositionnements successifs par rapport au scanner laser,
moyennant quoi, pendant chaque processus de repositionnement, le rayon laser est dévié par le scanner laser le long d'une orientation entre une direction initiale et une direction finale au-dessus de la surface,
**caractérisé en ce que**
la surface est déplacée, pendant chaque processus de repositionnement, au moins dans une phase d'accélération positive, dans laquelle une vitesse de la surface par rapport au scanner laser est augmentée, et dans une phase d'accélération négative, effectuée après la phase d'accélération positive, dans laquelle la vitesse de la surface par rapport au scanner laser est réduite à zéro et
lorsque, dans la phase d'accélération négative, la vitesse nulle est atteinte avant que le rayon laser ait atteint la direction finale, l'augmentation de vitesse dans la phase d'accélération positive du processus de repositionnement suivant commence à un moment auquel le rayon laser atteint la direction finale et,
lorsque, dans la phase d'accélération négative, la vitesse nulle est atteinte après que le rayon laser ait atteint la position finale, l'augmentation de vitesse dans la phase d'accélération positive du processus de repositionnement suivant commence immédiatement après que la vitesse nulle soit atteinte.

2. Procédé selon la revendication précédente, un des scanners laser émettant un signal de déclenchement à un moment auquel le rayon laser atteint la direction finale et, lorsque, dans la phase d'accélération négative, la vitesse nulle est atteinte avant que le rayon laser ait atteint la direction finale, l'augmentation de vitesse dans la phase d'accélération positive du processus de repositionnement suivant commence à ou après un moment auquel le signal de déclenchement est émis.

3. Procédé selon l'une des revendications précédentes, la déviation du rayon laser le long de l'orientation commence à la direction initiale simultanément à un moment auquel l'augmentation de la vitesse commence dans la phase d'accélération positive.

4. Procédé selon la revendication précédente,
la réduction de la vitesse pendant la phase d'accélération négative dure au moins 0,25 % du temps entre le moment précédent où la direction finale est atteinte et le moment suivante où la direction finale est atteinte.

5. Procédé selon la revendication précédente,
la réduction de la vitesse dure au moins 1 %, de préférence au moins 5 %, de préférence au moins 8 %, de préférence au moins 10 %, de préférence au moins 15 %, de préférence au moins 30 %, de préférence au moins 50 % du temps entre le moment précédent où la direction finale est atteinte et le moment suivant où la direction finale est atteinte.

6. Procédé selon l'une des revendications précédentes,
le processus de repositionnement comprenant une phase d'attente immédiatement après le moment où la vitesse nulle est atteinte dans la phase d'accélération négative, qui dure jusqu'au moment suivant où la direction finale est atteinte.

7. Procédé selon l'une des revendications précédentes,
le processus de repositionnement comprenant, après la fin de la phase d'accélération positive et avant le début de la phase d'accélération négative, une phase de vitesse constante, pendant laquelle la surface est déplacée par rapport au scanner laser avec une vitesse constante.

8. Procédé selon l'une des revendications précédentes,
la surface étant incurvée et étant déplacée, dans le processus de repositionnement, dans une direction qui est parallèle à la surface au niveau d'un point qui se trouve à l'intérieur de la zone entre la direction initiale et la direction finale de la déviation du rayon laser.

9. Procédé selon l'une des revendications précédentes, l'accélération étant constante dans la phase d'accélération positive et/ou dans la phase d'accélération négative.

10. Procédé d'usinage au laser d'une surface d'une pièce au moyen d'un scanner laser qui comprend une entrée d'encodage pour la rotation d'une déviation d'un rayon laser autour d'un axe de rotation virtuel,
la pièce étant maintenue dans un dispositif de maintien qui permet un positionnement de la pièce par rapport au scanner laser au moyen de cinq axes dans cinq degrés de liberté,
et un signal de commande étant appliqué à l'entrée d'encodage du scanner laser, qui provoque une rotation d'un champ de balayage du scanner laser dans un sixième degré de liberté autour d'un axe perpendiculaire au champ de balayage,
le repositionnement dans les six degrés de liberté permet d'amener une zone à usiner de la surface en coïncidence avec un champ de balayage du scanner laser,
un procédé d'usinage d'une surface selon l'une des revendications 1 à 9 étant exécuté et
le déplacement de la surface dans les processus de repositionnement étant provoqué par la rotation autour d'au moins un des six axes.
